# EUROPEAN PATENT SPECIFICATION

(11) **EP 3 455 965 B1**
(45) Date of publication and mention of the grant of the patent: **09.08.2023**
(21) Application number: 16901875.1
(22) Date of filing: 13.05.2016
(51) Int. Cl.: H04L 1/00, H04L 5/00

(54) **FLEXIBLE CHANNEL STATE REPORTING**
FLEXIBLE KANALSTATUSMELDUNG
RAPPORT D'ÉTAT DE CANAL EFFECTUÉ D'UNE MANIÈRE FLEXIBLE

(43) Date of publication of application: 20.03.2019
(73) Proprietor: Nokia Technologies Oy, 02610 Espoo (FI)
(72) Inventor: WANG, Xiaoyi, Hoffman Estates, Illinois 60169 (US); VOOK, Frederick Werner, Schaumburg, Illinois 60194 (US); VISOTSKY, Eugene, Buffalo Grove, Illinois 60089 (US); HUGL, Klaus, A-1070 Wien (AT)
(74) Representative: Nokia EPO representatives
(86) International application number: PCT/US2016/032310
(87) International publication number: WO 2017/196363

(56) References cited:
- WO-A1-2014/123386
- WO-A1-2015/176266
- US-A1- 2005 207 367
- US-A1- 2007 149 227
- US-A1- 2008 004 030
- US-A1- 2013 042 275

## Description

### TECHNICAL FIELD

The invention relates to cellular communication systems and, in particular, to a solution for reporting channel quality in a flexible manner.

### BACKGROUND OF THE INVENTION

In a cellular communication system, channel state reporting is used in selection of a modulation and coding scheme and/or a multi-antenna configuration, for example. Regarding the multi-antenna configuration, a channel rank or a precoding configuration may be selected on the basis of the channel state reporting. The channel rank may refer to the number of spatial channels available between a transmitter and a receiver, while the precoding configuration may refer to a beamforming configuration defining transmission characteristics for the spatial channels. In some systems, the spatial channels used for transferring communication signals between the transmitter and the receiver are called spatial layers.

Conventional channel state reporting methods are relatively limited and strictly preconfigured while a radio channel may be static or highly volatile. Documents WO 2014/123386 and WO 2015/176266 discuss channel state information reporting.

### BRIEF DESCRIPTION OF THE INVENTION

The invention is defined by the subject matter of the independent claims. Some embodiments are defined in the dependent claims.

### BRIEF DESCRIPTION OF THE DRAWINGS

In the following the invention will be described in greater detail by means of preferred embodiments with reference to the accompanying drawings, in which
Figure 1 illustrates a wireless communication scenario to which embodiments of the invention may be applied;
Figure 2 illustrates a flow diagram of an embodiment for selecting a feedback scheme for a channel measurement report;
Figure 3 illustrates a flow diagram of an embodiment for providing a terminal device with a resource budget for the channel measurement report;
Figures 4 and 5 illustrate different channel characteristics affecting the selection of the feedback scheme according to some embodiments of the invention;
Figures 6 and 7 illustrate signalling diagrams of procedures for carrying out channel state reporting according to some embodiments of the invention; and
Figures 8 and 9 illustrate block diagram of structures of apparatuses according to some embodiments of the invention.

### DETAILED DESCRIPTION OF THE INVENTION

The following embodiments are exemplifying. Although the specification may refer to "an", "one", or "some" embodiment(s) in several locations of the text, this does not necessarily mean that each reference is made to the same embodiment(s), or that a particular feature only applies to a single embodiment. Single features of different embodiments may also be combined to provide other embodiments.

Embodiments described may be implemented in a radio system, such as in at least one of the following: Universal Mobile Telecommunication System (UMTS, 3G) based on basic wideband-code division multiple access (W-CDMA), high-speed packet access (HSPA), Long Term Evolution (LTE), LTE-Advanced, and/or 5G system.

The embodiments are not, however, restricted to the system given as an example but a person skilled in the art may apply the solution to other communication systems provided with necessary properties. One example of a suitable communications system is the 5G system, as listed above. 5G has been envisaged to use multiple-input-multiple-output (MIMO) multi-antenna transmission techniques, many more base stations or nodes than the current network deployments of LTE (a so-called small cell concept), including macro sites operating in co-operation with smaller local area access nodes and perhaps also employing a variety of radio technologies for better coverage and enhanced data rates. 5G will likely be comprised of more than one radio access technology (RAT), each optimized for certain use cases and/or spectrum. 5G mobile communications will have a wider range of use cases and related applications including video streaming, augmented reality, different ways of data sharing and various forms of machine type applications, including vehicular safety, different sensors and real-time control. 5G is expected to have multiple radio interfaces, namely below 6GHz, cmWave and mmWave, and also being integrata-ble with existing legacy radio access technologies, such as the LTE. Integration with the LTE may be implemented, at least in the early phase, as a system, where macro coverage is provided by the LTE and 5G radio interface access comes from small cells by aggregation to the LTE. In other words, 5G is planned to support both inter-RAT operability (such as LTE-5G) and inter-RI operability (inter-radio interface operability, such as below 6GHz - cmWave, below 6GHz - cmWave - mmWave). One of the concepts considered to be used in 5G networks is network slicing in which multiple independent and dedicated virtual sub-networks (network instances) may be created within the same infrastructure to run services that have different requirements on latency, reliability, throughput and mobility.

It should be appreciated that future networks will most probably utilize network functions virtualization (NFV) which is a network architecture concept that proposes virtualizing network node functions into "building blocks" or entities that may be operationally connected or linked together to provide services. A virtualized network function (VNF) may comprise one or more virtual machines running computer program codes using standard or general type servers instead of customized hardware. Cloud computing or cloud data storage may also be utilized. In radio communications this may mean node operations to be carried out, at least partly, in a server, host or node operationally coupled to a remote radio head. It is also possible that node operations will be distributed among a plurality of servers, nodes or hosts. It should also be understood that the distribution of labor between core network operations and base station operations may differ from that of the LTE or even be non-existent. Some other technology advancements probably to be used are Software-Defined Networking (SDN), Big Data, and all-IP, which may change the way networks are being constructed and managed.

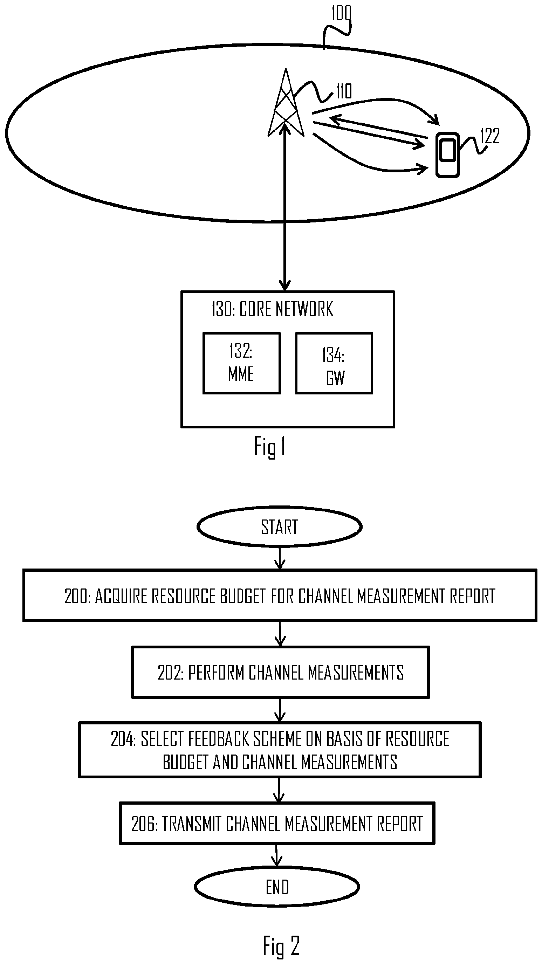

Figure 1 illustrates an example of a communication system to which some embodiments of the invention may be applied. The system may comprise at least one access node 110 providing and managing a cell 100. The cell may be, e.g., a macro cell, a micro cell, femto, or a pico cell, for example. From another point of view, the cell may define a coverage area or a service area of the access node 110. The access node 110 may be an evolved Node B (eNB) as in the LTE and LTE-A, an access point of an IEEE 802.11-based network (Wi-Fi or wireless local area network, WLAN), or any other apparatus capable of controlling radio communication and managing radio resources within a cell. For 5G solutions, the implementation may be similar to LTE-A, as described above. The access node 110 may be called a base station or a network node. The system may be a cellular communication system composed of a radio access network of access nodes, each controlling a respective cell or cells. The access nodes may provide terminal devices 122 with wireless access to other networks such as the Internet. In some scenarios, one or more local area access nodes may be arranged within a control area of a macro cell access node. The local area access node may provide wireless access within a sub-cell that may be comprised within a macro cell. Examples of the sub-cell may include a micro, pico and/or femto cell. Typically, the sub-cell provides a hot spot within the macro cell. The operation of the local area access node may be controlled by an access node under whose control area the sub-cell is provided.

In the case of multiple access nodes in the communication network, the access nodes may be connected to each other with an interface. LTE specifications call such an interface as X2 or S1 interface. In IEEE 802.11 networks, a similar interface is provided between access points. Other communication methods between the access nodes may also be possible. The access nodes may be further connected via another interface to a core network 130 of the cellular communication system. The LTE specifications specify the core network as an evolved packet core (EPC), and the core network may comprise a mobility management entity (MME) 132 and a gateway (GW) node 134. The MME may handle mobility of terminal devices in a tracking area encompassing a plurality of cells and also handle signalling connections between the terminal devices and the core network 130. The gateway node 134 may handle data routing in the core network 130 and to/from the terminal devices.

The radio system of Figure 1 may support Machine Type Communication (MTC). MTC may enable providing service for a large amount of MTC capable devices, such as the at least one terminal device 122. The at least one terminal device 120 may comprise a mobile phone, smart phone, tablet computer, laptop or other devices used for user communication with the radio communication network, such as an MTC network. These devices may provide further functionality compared to the MTC scheme, such as communication link for voice, video and/or data transfer. However, in MTC perspective the at least one terminal device 122 may be understood as a MTC device. It needs to be understood that the at least one terminal device 122 may also comprise another MTC capable device, such as a sensor device providing position, acceleration and/or temperature information to name a few examples. Some embodiments of the invention may thus be applicable to Internet of Things (IoT) systems, e.g. a radio access technology supporting a narrowband IoT (NB-IoT) communication scheme.

As illustrated in Figure 1 with the multiple arrows representing downlink transmission from the access node 110 to the terminal device 122, the downlink transmission may be carried out by using multi-antenna transmission techniques such as multiple-input-multiple-output (MIMO) communication. MIMO refers to a scenario where both the access node 110 and the terminal device 122 employ an antenna array comprising a plurality of antenna elements or antenna ports. In a typical radio channel, multipath propagation of radio signals between the access node 110 and the terminal device 122 may be exploited by generating multiple spatially distributed channels between the access node 110 and the terminal device 122. The spatial channels may be selected such that they are mutually orthogonal or substantially uncorrelated. Such spatial channels may be used for diversity transmission in which the same information is transmitted through different spatial channels, thus improving reliability of transmission. Another use case is spatial multiplexing in which different data is transmitted through different spatial channels, thus improving data rate and throughput of the communication. In a similar manner, the MIMO communication may be applied to uplink transmissions.

With respect to the MIMO transmission and to transmission in general, channel measurements are typically employed in cellular communication systems and in other wireless systems. The channel measurements may be employed in selection of transmission parameters such as a modulation and coding scheme (MCS) and MIMO transmission scheme, for example. MIMO antenna operation in wireless systems benefits of advanced signal processing techniques that rely on the spatial degrees of freedom observed across multiple transmit/receive antennas deployed in the system. The MIMO signal processing techniques are dependent on the accurate channel state information (CSI), and providing accurate CSI from a MIMO receiver to a MIMO transmitter is a central part of MIMO communications. In traditional MIMO operation, e.g. LTE downlink MIMO, feedback from a terminal device to an access node is used to provide the necessary CSI to enable MIMO operation at the access node. The feedback has been designed to support a triplet of a rank indicator (RI), precoding matrix indicator (PMI), and a channel quality indicator (CQI) reported from the terminal device to a serving access node. RI and PMI indicate a channel rank and an index of the best pre-coding configuration selected by the terminal device, respectively. The channel rank may indicate the number of (orthogonal) spatial channels available between the access node and the terminal device. The CQI may specify the modulation and coding scheme and/or a transport block size requested by the terminal device. The CQI is typically proportional to a signal-to-noise power ratio (SNR) of the radio channel. Sometimes, the SNR considers also interfering signals and it may be called signal-to-interference-plus-noise power ration (SINR). Such feedback scheme fall under the "implicit feedback framework", since the CQI, RI, and the PMI feedback do not directly convey information about the channel itself but rather specify the transmission configuration preferred by the terminal device under its current channel conditions.

In contrast, the "explicit feedback framework" may be defined as feedback that describes the channel itself. It has been sometimes called high-resolution feedback, since direct quantization of the channel can provide more information about the measured channel than the implicit feedback. Explicit feedback or high-resolution feedback has been considered as one of the future evolution directions for both LTE and 5G systems.

Essentially, a downlink MIMO channel response at a given frequency may be given by an M-by-N complex channel matrix, where M and N denote the number of receive and transmit antennas, respectively. There are different ways to quantize this channel matrix comprising complex values as elements. It is possible to quantize each element of the MIMO channel matrix, or it is possible to perform a singular value decomposition on the matrix and, thereafter, quantize the resulting singular values and/or singular vectors. Then, the quantization method for the elements of the singular vectors and/or singular values needs to be specified. Similar approach applies to eigenvalue decomposition in which the channel matrix may be decomposed into eigenvalues and eigenvectors. In general, similar to other feedback methods, a tradeoff of feedback signaling overhead and the MIMO performance is the primary concern when designing "explicit feedback" quantization methods.

Since a format of the explicit feedback should be known by both the serving access node and the terminal device, detailed interpretation of the feedback bits must be fully described in the specifications of the wireless system. One simple way to specify an explicit feedback format is to use a pre-designed quantization method for each component of the radio channel and for all terminal devices in the system. However, such a simple method cannot consider the fact that the different radio environments measured by the different terminal devices require different feedback requirements. For instance, for a terminal device experiencing rich multi-path channel conditions and a high degree of frequency-selective fading, it is advantageous to use more feedback bits on quantizing multiple channel matrices across a frequency band. Conversely, for a terminal device experiencing line-of-sight (LoS) channel conditions towards the access node, it is advantageous to use the bits on quantizing just a single dominant channel eigenvector/singular vector for a frequency band.

In many cases, the access node cannot decide, with a sufficient accuracy, what type of a radio channel each terminal device is measuring. Accordingly, it is complicated or even impossible for the access node to select a suitable feedback scheme for each terminal device.

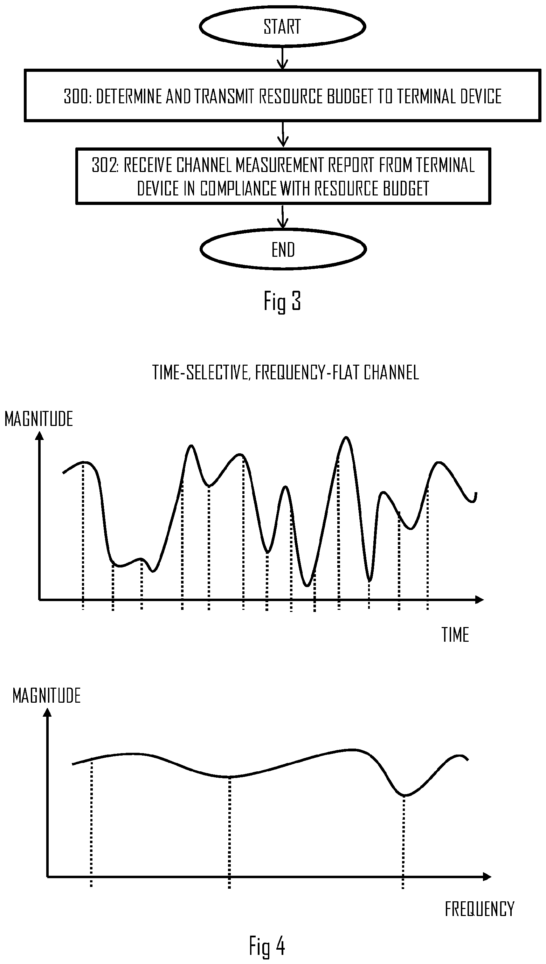

Figures 2 and 3 illustrate some embodiments for flexible channel state reporting. Figure 2 illustrates a process from a viewpoint of a terminal device reporting to an access node, and Figure 3 illustrates a process from a viewpoint of the access node. Referring to Figure 2, the process in the terminal device comprises: acquiring a resource budget for transmittal of a channel measurement report to an access node (block 200); performing channel measurements of a radio channel (block 202); selecting a feedback scheme of the channel measurement report on the basis of the resource budget and a result of the channel measurements (block 204); and causing transmission of the channel measurement report according to the selected feedback scheme (block 206).

Referring to Figure 3, the process in the access node comprises: providing the terminal device with a resource budget for transmittal of a channel measurement report from the terminal device to the access node (block 300); and receiving the channel measurement report from the terminal device according to a feedback scheme selected by the terminal device in compliance with the resource budget (block 302).

In the embodiments of Figures 2 and 3, the access node provides the terminal devices with a budget for the channel measurement report and the terminal device then selects the actual feedback scheme of the channel measurement report on the basis of measured channel characteristics such that the channel measurement report complies with the resource budget. The resource budget may enable the terminal device to select amongst a plurality of feedback schemes for the channel measurement report. This provides the terminal device with flexibility in adapting the channel measurement reporting to the prevailing channel characteristics.

In an embodiment, the resource budget indicates an upper limit for uplink capacity usage of the channel measurement report. The upper limit may be defined in terms of a maximum bit rate for the channel measurement report, e.g. in bits per second (bps). Other metrics suitable for indicating a maximum amount of transmission resources may be equally used to define the resource budget.

In an embodiment, the channel measurement comprises at least one of the following: a quantized representation of a radio channel response, a metric proportional to a signal-to-noise-power ratio associated with the radio channel, an indicator of a post processing signal quality of a signal received from the radio channel, a pre-coding matrix indicator, and an indicator of a number of spatial channels associated with the radio channel.

In an embodiment, the terminal device may select, as the feedback scheme, a suitable feedback granularity that complies with the resource budget. The feedback granularity may refer to frequency granularity describing a number of channel measurement samples in a frequency domain. From another perspective, the frequency granularity describes a resolution for the channel measurement reporting in the frequency domain. The selection of the frequency granularity may comprise selecting a bandwidth between two adjacent frequency samples of the channel measurement report. The terminal device may select a wideband feedback scheme consisting of a single frequency sample representing the whole communication band. The terminal device may select to report the measured channel characteristics for each of a plurality of sub-bands of the communication band, e.g. the channel matrix or a portion of the channel matrix per sub-band or CQI per sub-band. A sub-band may consist of a single physical resource block comprising a determined number of sub-carriers or of a plurality of physical resource blocks. The terminal device may select the number of sub-bands to be reported according to the measured channel characteristics and the resource budget.

The feedback granularity may refer to temporal granularity describing a frequency of channel measurement reporting in a time domain. From another perspective, the temporal granularity describes a resolution for the channel measurement reporting in the time domain. The terminal device may select a transmission periodicity of the channel measurement report on the basis the measured channel characteristics of the radio channel and the resource budget. In another embodiment, the terminal device may determine the need for aperiodic channel measurement reporting on the basis of the resource budget and the channel characteristics.

The feedback granularity may refer to spatial granularity describing a number of channel measurement samples in a spatial domain. From another perspective, the spatial granularity describes a size of a channel matrix or the number of bits used to describe the channel matrix. The number of bits may be defined by specifying an appropriate quantization granularity for the elements of the channel matrix. In another embodiment, the spatial granularity may refer to whether the terminal device transmits a CQI per spatial channel or one CQI for all spatial channels. In this context, the quantization granularity may specify the word length for the CQI reporting.

In an embodiment, the terminal device may select jointly any combination of the above-described granularities. For example, the terminal device may select the frequency resolution and/or transmission periodicity of a channel quality report for the selection of the modulation and coding scheme, a channel matrix, or an element of the channel matrix on the basis of the resource budget and the measured channel characteristics. An element of the channel matrix may be a rank report reporting the channel rank, eigenvalues or singular values of the channel matrix, eigenvectors or singular vectors of the channel matrix, or the strongest eigenvector or singular vector of the channel matrix. The terminal device may select a different frequency resolution and/or transmission periodicity for different measurement information, e.g. a different frequency resolution and/or transmission periodicity for the strongest eigenvector or singular vector than for the number of singular values or eigenvalues.

Table 1 below illustrate some options for the granularity of each channel feedback component:

**Table 1**

| **Feedback Component** | **Granularity Options** |
|---|---|
| frequency granularity | Wideband scheme or sub-band scheme with K number of sub-carriers on each sub-band. Different numbers of K |
| | may provide for more options for granularity |
| temporal granularity | feedback periodicity (every P sub-frames) |
| spatial granularity | number of reported values/vectors of the channel matrix |
| quantization granularity | X bits for describing amplitude of a channel matrix element, Y bits for describing phase of the channel matrix element. X=Y or X≠Y, Z bits for CQI reporting |

In an embodiment, the terminal device may select between the implicit channel measurement feedback and the explicit channel measurement feedback on the basis of the measured channel characteristics and the resource budget. For example, outdoor static terminal with line-of-sight to the access node may observe radio channel with a lower changing rate in both time domain and frequency domain. In such a case, the terminal device may select explicit channel measurement feedback with a large number of bits for quantizing the channel response and further select lower feedback resolution in both frequency (wideband) and time domain (large periodicity and/or no additional aperiodic channel measurement reporting or only aperiodic reporting).

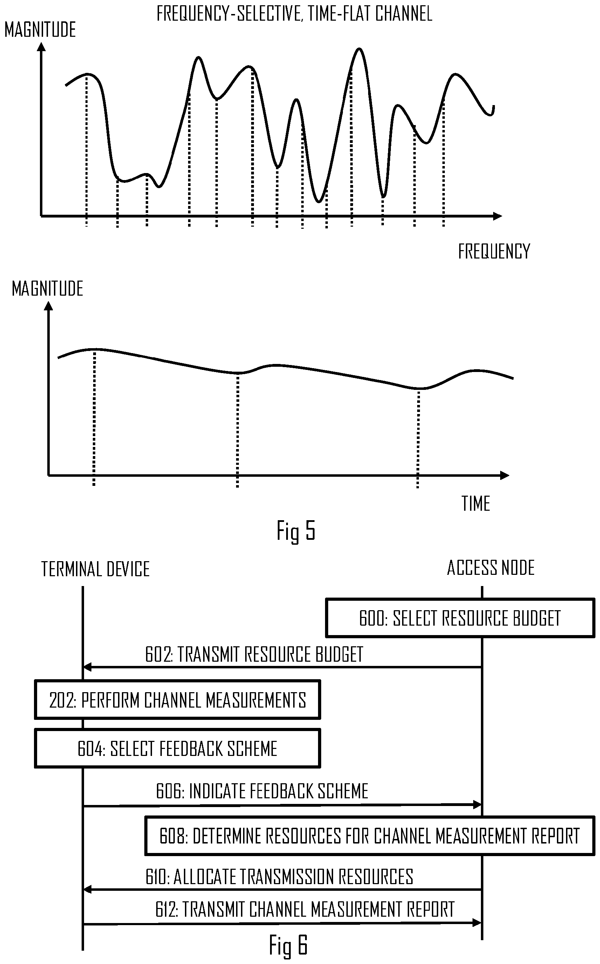

Let us now describe the selection of the granularity with reference to Figure 4 and 5. Figure 4 illustrates a radio channel that is highly time-selective and frequency-non-selective (frequency-flat). It means that the characteristics of the radio channel change rapidly in the time domain but are relatively stable in the frequency domain. In such an embodiment, the terminal device may select high temporal granularity and low frequency granularity for the channel measurement report. In this case, the terminal device may select high transmission periodicity for at least some of the measured channel characteristics. Additionally or alternatively, the terminal device may select, for example, the wideband feedback scheme or split the frequency band to only a few sub-bands and report the channel characteristics only for those sub-bands, e.g. wideband CQI/RI/PMI, wideband channel matrix, or wideband portion of the channel matrix.

Figure 5 illustrates a radio channel that is highly frequency-selective but relatively stable in the time domain (time-flat). It means that the characteristics of the radio channel change greatly in the frequency domain but are relatively stable in the time domain. In such an embodiment, the terminal device may select low temporal granularity and high frequency granularity for the channel measurement report. In this case, the terminal device may select low transmission periodicity for at least some of the measured channel characteristics. Additionally or alternatively, the terminal device may select a high frequency granularity, e.g. by splitting the frequency band to a high number of sub-bands for reporting the channel characteristics for each of these sub-bands, e.g. multiple CQI/RI/PMI values with one per each sub-band.

In a similar manner, the terminal device may measure the spatial selectivity of the radio channel. For example in a case of line-of-sight to the access node, the terminal device may select low spatial granularity and report, for example, only the strongest eigenvector and eigenvalue (or singular vector and singular value). In a case of high spatial selectivity, e.g. high channel rank, the terminal device may increase the spatial granularity. The increase in the spatial granularity may be realized by increasing quantization degree by allocating more bits for describing elements of the channel matrix, e.g. amplitude and/or phase of the elements. The increase in the spatial granularity may be realized by reporting a higher number of elements of the channel matrix, e.g. all the eigenvalues and/or eigenvectors (or singular values and/or singular vectors) or CQI for a higher number of spatial channels.

Regarding the temporal granularity, the terminal device may select the transmission periodicity of the channel measurement report to adjust the temporal granularity. The resource budget may define a maximum transmission periodicity and the terminal device may select the transmission periodicity on the basis of the measured time-selectivity of the radio channel such that the transmission periodicity is the maximum transmission periodicity or lower than the maximum transmission periodicity.

In an embodiment, the terminal device selects a transmission format of the channel measurement report on the basis of the resource budget and a result of the channel measurements. The resource budget may define a plurality of candidate transmission formats for the channel measurement report, wherein the plurality of candidate transmission formats differ from one another in at least one of the following characteristics: amount of transmission resources for reporting time domain characteristics of the radio channel, temporal transmission density of the reporting, amount of transmission resources for reporting frequency domain characteristics of the radio channel, amount of transmission resources for reporting spatial domain characteristics of the radio channel, and a number of bits for quantizing contents of the channel measurement report.

Regarding the temporal transmission density, the candidate transmission formats may specify a periodic transmission format and an aperiodic transmission format. The periodic transmission format may be associated with a variable transmission periodicity. The aperiodic transmission format may be associated with a certain transmission density, too. The terminal device may then choose whether it needs the periodic or aperiodic transmission of the channel measurement report and further select the periodicity of the periodic transmission or density of the aperiodic transmission. The density may be considered as an approximation of how frequently the aperiodic transmission of the channel measurement report should be triggered.

The different candidate transmission formats may define different sizes for the channel measurement report and/or different distributions of transmission resources between the time, frequency, and spatial domain reporting. The access node may indicate the resource budget that may limit the available set of candidate transmission formats through the maximum size of the channel measurement report. Then, the terminal device may select the transmission format that defines contents or structure of the channel measurement report that matches best with the measure channel characteristics. The terminal device may select, on the basis of the channel measurements, what type of information it wants to report to the access node, e.g. any one of the above-described implicit or explicit channel information. Thereafter, it may select a candidate transmission format that matches with the selection. For example, one candidate transmission format may be associated with the wideband feedback scheme while another candidate transmission format may be associated with higher frequency granularity. Similarly, one candidate transmission format may be associated with RI reporting while another candidate transmission format may be associated with reporting the vectors and/or values of the channel matrix. One candidate transmission formats may allow for a higher word length and, hence, more accurate quantization of the reported channel information such as the channel matrix than another candidate transmission format. Accordingly, the different candidate transmission formats may provide different transmission configurations for the channel measurement report, thus enabling the terminal device to flexibly select a transmission format that meets the measured channel characteristics reported to the access node.

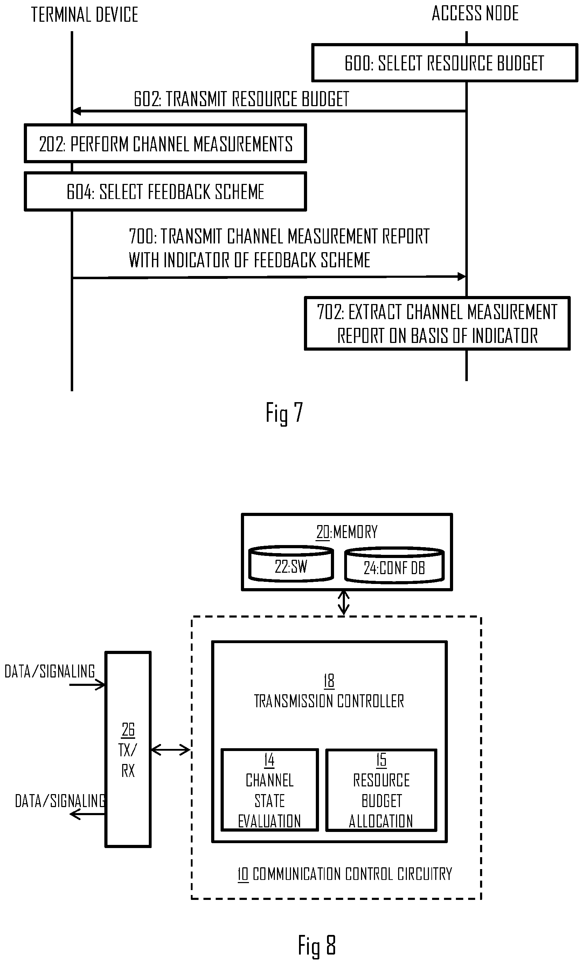

Now let us describe some embodiments for reporting the channel characteristics with reference to signalling diagrams of Figure 6 and 7. Referring to Figure 6, the access node may select the resource budget for the terminal device in block 600. Execution of block 600 may be triggered upon the access node determining to trigger a MIMO transmission mode for the terminal device. The access node may select the resource budget, for example, on the basis of one or more of the following selection criteria: quality-of-service (QoS) of the terminal device, traffic load in the access node, priority of the terminal device, network operation mode, and overall channel quality between the access node and the terminal device on an uplink and/or a downlink control and/or data channel. The access node may select a higher resource budget for a higher QoS class, lower traffic load, higher priority of the terminal device, and lower overall channel quality. The access node may select a lower resource budget for a lower QoS class, higher traffic load, lower priority of the terminal device, and higher overall channel quality. The resource budget may be defined in terms of a maximum data rate (in bps, for example), a maximum transmission periodicity of the channel measurement report, and/or a maximum amount of frequency resources for the measurement report.

Upon selecting the resource budget in block 600, the access node may transmit a downlink control message to the terminal device (step 602), the control message comprising an indicator indicating the selected resource budget. Upon receiving the control message in step 602, the terminal device may extract the indicator and determine the resource budget for the channel measurement report from the indicator value.

In block 202, the terminal device measures the channel characteristics by measuring one or more reference signals transmitted by the access node, for example.

In block 604, the terminal device selects the feedback scheme on the basis of the channel measurements and the resource budget. The selection of the feedback scheme may be carried out according to any one of the above-described embodiments, e.g. selection of the transmission periodicity of the channel measurement report or selecting a transmission format, size, and/or structure of the channel measurement report. Upon selecting the feedback scheme, the terminal device may transmit an uplink control message to the access node in step 606. The uplink control message may comprise an indicator indicating the selected feedback scheme. Upon receiving the control message in step 606, the access node may extract the indicator and determine the feedback scheme selected by the terminal device. The feedback scheme may be associated with a determined amount of transmission resources of the channel measurement report and, as a consequence, the indicator may also indicate the amount of resources the terminal device needs for the transmission of the channel measurement report. The access node may use the received indicator to allocate the transmission resources to the terminal device for the transmission of the channel measurement report. In block 608, the access node determines the transmission resources such that the amount of resources complies with the resources required by the selected feedback scheme. In step 610, the access node transmits a resource allocation message to the terminal device, thereby indicating the allocated uplink resources to the terminal device. Upon extracting the resource allocation message, the terminal device is capable of transmitting the channel measurement report to the access node in step 612. Upon receiving the channel measurement report in step 612, the access node may use the indicator received in step 606 to interpret the contents of the received channel measurement report.

In an embodiment, the access node transmits an acknowledgment message to the terminal device upon receiving the control message in step 606. Upon receiving the acknowledgment message from the access node, the terminal device may initiate the transmission of the channel measurement report in uplink transmission resources allocated in step 610 or allocated beforehand to the terminal device, e.g. according to static or semi-static resource allocation.

Figure 7 illustrates another embodiment for transmitting the channel measurement report. The blocks or steps denoted by the same reference numbers as in Figure 6 represent the same or substantially similar functions. The embodiment of Figure 7 differs from the embodiment of Figure 6 in that the terminal device transmits the indicator of the selected feedback scheme together with the channel measurement report or in the channel measurement report. Such a single-shot approach reduces signalling overhead.

Referring to Figure 7, upon selecting the feedback scheme in block 604, the terminal device generates the channel measurement report and the indicator indicating the feedback scheme and transmits the channel measurement report and the indicator in an uplink control message to the access node in step 700. The channel measurement report and the indicator may be transmitted in uplink transmission resources allocated to the terminal device beforehand, e.g. as a static or semi-static allocation. Upon receiving the uplink control message in step 700, the access node may first extract the indicator in order to determine how to interpret the contents of the channel measurement report. Upon determining the feedback scheme associated with the received indicator, the access node is capable of extracting the contents of the channel measurement report in block 702. In the embodiment of Figure 6, the adaptation of the resource allocation to the feedback scheme selected by the terminal device is flexible because the terminal device indicates the selected feedback scheme before the resource allocation. In the embodiment of Figure 7, the terminal device may transmit the channel measurement report at the uplink transmission resources readily allocated to the terminal device. In the embodiment of Figure 7, the terminal device may have the option of selecting the feedback scheme by using other tools but not the temporal granularity. In one exemplary implementation, the terminal device may only select the feedback scheme having different frequency, spatial and quantization granularity.

Figure 8 illustrates an apparatus configured to carry out the functions described above in connection with the access node 110. The apparatus may be an electronic device comprising electronic circuitries. The apparatus may be the access node 110 or it may be comprised in or be applicable to the access node 110. The apparatus may comprise a communication control circuitry 10 such as at least one processor, and at least one memory 20 including a computer program code (software) 22 wherein the at least one memory and the computer program code (soft-ware) are configured, with the at least one processor, to cause the apparatus to carry out any one of the embodiments of the access node described above.

The memory 20 may be implemented using any suitable data storage technology, such as semiconductor based memory devices, flash memory, magnetic memory devices and systems, optical memory devices and systems, fixed memory and removable memory. The memory may comprise a configuration database 24 for storing configuration data for communicating in a cell over a radio interface. For example, the configuration database 24 may store frame configurations supported by the access node, specifications for the feedback schemes for the channel measurement reports, an associated indicator for each feedback scheme, criteria for determining the resource budget, current operational conditions of the access node that may affect the determination of the resource budget, etc.

The apparatus may further comprise a communication interface (TX/RX) 26 comprising hardware and/or software for realizing communication connectivity according to one or more communication protocols. The communication interface may provide the apparatus with communication capabilities to communicate in the cellular communication system and enable communication with other access nodes and terminal devices, for example. The communication interface 26 may comprise standard well-known components such as an amplifier, filter, frequency-converter, (de)modulator, and encoder/decoder circuitries and one or more antennas. The communication interface 26 may comprise radio interface components providing the apparatus with radio communication capability in the cell.

In an embodiment of Figure 8, at least some of the functionalities of the access node may be shared between two physically separate devices, forming one operational entity. Therefore, the apparatus may be seen to depict the operational entity comprising one or more physically separate devices for executing at least some of the described processes. Thus, the apparatus of Figure 8, utilizing such a shared architecture, may comprise a remote control unit (RCU), such as a host computer or a server computer, operatively coupled (e.g. via a wireless or wired network) to a remote radio head (RRH) located in a base station site. In an embodiment, at least some of the described processes of the access node may be performed by the RCU. In an embodiment, the execution of at least some of the described processes may be shared among the RRH and the RCU. In such a context, RCU may comprise the components illustrated in Figure 8, and the communication interface 26 may provide the RCU with the connection to the RRH. The RRH may then comprise radio frequency signal processing circuitries and antennas, for example.

In an embodiment, the RCU may generate a virtual network through which the RCU communicates with the RRH. In general, virtual networking may involve a process of combining hardware and software network resources and network functionality into a single, software-based administrative entity, a virtual network. Network virtualization may involve platform virtualization, often combined with resource virtualization. Network virtualization may be categorized as external virtual networking which combines many networks, or parts of networks, into the server computer or the host computer (i.e. to the RCU). External network virtualization is targeted to optimized network sharing. Another category is internal virtual networking which provides network-like functionality to the software containers on a single system. Virtual networking may also be used for testing the terminal device.

In an embodiment, the virtual network may provide flexible distribution of operations between the RRH and the RCU. In practice, any digital signal processing task may be performed in either the RRH or the RCU and the boundary where the responsibility is shifted between the RRH and the RCU may be selected according to implementation.

Referring to Figure 8, the communication control circuitry 10 may comprise a transmission controller 18 configured to carry out control plane signalling with the terminal device(s) in one or more cells managed by the access node 110. The transmission controller 18 may communicate with the terminal devices in the context of the channel measurements, for example. For that purpose, the transmission controller may comprise a resource budget allocation circuitry 15 configured to determine the resource budget for the terminal device according to block 300 and 600 described above. The transmission controller 18 may further comprise a channel state evaluation circuitry 14 configured to receive the channel measurement report (steps 302, 612, 700) and to extract contents of the channel measurement report according to the indicator received from the reporting terminal device, as described above in steps 606, 612, 700, and 702. The transmission controller may use the contents of the channel measurement report when selecting downlink transmission parameters such as a modulation and coding scheme, a precoding matrix defining a beamforming configuration, etc.

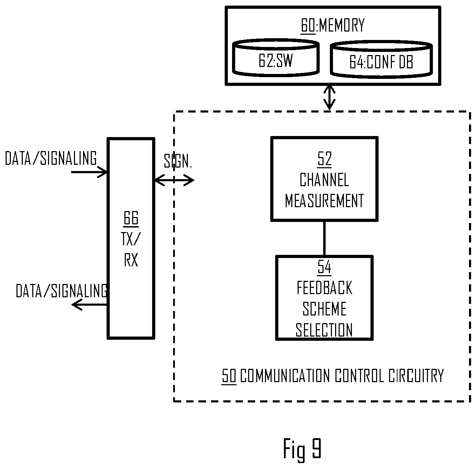

Figure 9 illustrates an apparatus configured to carry out the functions described above in connection with the terminal device 120. The apparatus may be an electronic device comprising electronic circuitries. The apparatus may be the terminal device 120 or it may be comprised in or be applicable to the terminal device 120. The apparatus may comprise a communication control circuitry 50 such as at least one processor, and at least one memory 60 including a computer program code (software) 62 wherein the at least one memory and the computer program code (software) are configured, with the at least one processor, to cause the apparatus to carry out any one of the embodiments of the terminal device described above.

The memory 60 may be implemented using any suitable data storage technology, such as semiconductor based memory devices, flash memory, magnetic memory devices and systems, optical memory devices and systems, fixed memory and removable memory. The memory may comprise a configuration database 64 for storing configuration data for communicating with one or more access nodes over a radio interface. For example, the configuration database 64 may store frame configurations supported by the terminal device, specifications for the feedback schemes for the channel measurement reports, an associated indicator for each feedback scheme, the current resource budget for the channel measurement report, criteria for determining the feedback scheme on the basis of the resource budget and the channel measurements, etc.

The apparatus may further comprise a communication interface (TX/RX) 66 comprising hardware and/or software for realizing communication connectivity according to one or more communication protocols. The communication interface may provide the apparatus with communication capabilities to communicate in the cellular communication system and enable communication with the access node(s) and, in some embodiments, other terminal devices. The communication interface 66 may comprise standard well-known components such as an amplifier, filter, frequency-converter, (de)modulator, and encoder/decoder circuitries and one or more antennas. The communication interface 66 may comprise radio interface components providing the apparatus with radio communication capability in the cell.

The communication control circuitry 50 may comprise a channel measurement circuitry 52 configured to measure the channel state or channel characteristics. The channel measurement circuitry 52 may be configured to measure a signal-to-noise ratio (SNR) of a received signal, a received signal strength indicator (RSSI), or another metric representing a path loss or signal attenuation between the access node and the terminal device on the communication channel. The channel measurement circuitry 52 may be configured to measure the channel rank and the channel matrix for MIMO communications. The channel measurement circuitry may be configured to output the results of the channel measurements to a feedback scheme selection circuitry 54 configured to select the feedback scheme for the channel measurement report according to any one of the above-described embodiments. The feedback scheme selection circuitry 54 may be configured to carry out any one of blocks 204 and 604 described above. Upon selecting the feedback scheme that complies with the resource budget, the feedback scheme selection circuitry 54 may be configured to output an indicator of the selected feedback scheme and the channel measurement report to the communication interface 66 for transmission to the access node.

As used in this application, the term 'circuitry' refers to all of the following: (a) hardware-only circuit implementations, such as implementations in only analog and/or digital circuitry, and (b) combinations of circuits and soft-ware (and/or firmware), such as (as applicable): (i) a combination of processor(s) or (ii) portions of processor(s)/software including digital signal processor(s), software, and memory(ies) that work together to cause an apparatus to perform various functions, and (c) circuits, such as a microprocessor(s) or a portion of a microprocessor(s), that require software or firmware for operation, even if the software or firmware is not physically present. This definition of 'circuitry' applies to all uses of this term in this application. As a further example, as used in this application, the term 'circuitry' would also cover an implementation of merely a processor (or multiple processors) or a portion of a processor and its (or their) accompanying software and/or firmware. The term 'circuitry' would also cover, for example and if applicable to the particular element, a baseband integrated circuit or applications processor integrated circuit for a mobile phone or a similar integrated circuit in a server, a cellular network device, or another network device.

In an embodiment, at least some of the processes described in connection with Figures 2 to 7 may be carried out by an apparatus comprising corresponding means for carrying out at least some of the described processes. Some example means for carrying out the processes may include at least one of the following: detector, processor (including dual-core and multiple-core processors), digital signal processor, controller, receiver, transmitter, encoder, decoder, memory, RAM, ROM, software, firmware, display, user interface, display circuitry, user interface circuitry, user interface software, display software, circuit, antenna, antenna circuitry, and circuitry. In an embodiment, the at least one processor, the memory, and the computer program code form processing means or comprises one or more computer program code portions for carrying out one or more operations according to any one of the embodiments of Figures 2 to 7 or operations thereof.

The techniques and methods described herein may be implemented by various means. For example, these techniques may be implemented in hardware (one or more devices), firmware (one or more devices), software (one or more modules), or combinations thereof. For a hardware implementation, the apparatus(es) of embodiments may be implemented within one or more application-specific integrated circuits (ASICs), digital signal processors (DSPs), digital signal processing devices (DSPDs), programmable logic devices (PLDs), field programmable gate arrays (FPGAs), processors, controllers, micro-controllers, microprocessors, other electronic units designed to perform the functions described herein, or a combination thereof. For firmware or software, the implementation can be carried out through modules of at least one chipset (e.g. procedures, functions, and so on) that perform the functions described herein. The software codes may be stored in a memory unit and executed by processors. The memory unit may be implemented within the processor or externally to the processor. In the latter case, it can be communicatively coupled to the processor via various means, as is known in the art. Additionally, the components of the systems described herein may be rearranged and/or complemented by additional components in order to facilitate the achievements of the various aspects, etc., described with regard thereto, and they are not limited to the precise configurations set forth in the given figures, as will be appreciated by one skilled in the art.

Embodiments as described may also be carried out in the form of a computer process defined by a computer program or portions thereof. Embodiments of the methods described in connection with Figures 2 to 7 may be carried out by executing at least one portion of a computer program comprising corresponding instructions. The computer program may be in source code form, object code form, or in some intermediate form, and it may be stored in some sort of carrier, which may be any entity or device capable of carrying the program. For example, the computer program may be stored on a computer program distribution medium readable by a computer or a processor. The computer program medium may be, for example but not limited to, a record medium, computer memory, read-only memory, electrical carrier signal, telecommunications signal, and software distribution package, for example. The computer program medium may be a nontransitory medium. Coding of software for carrying out the embodiments as shown and described is well within the scope of a person of ordinary skill in the art.

Even though the invention has been described above with reference to an example according to the accompanying drawings, it is clear that the invention is not restricted thereto but can be modified in several ways within the scope of the appended claims. Therefore, all words and expressions should be interpreted broadly and they are intended to illustrate, not to restrict, the embodiment. It will be obvious to a person skilled in the art that, as technology advances, the inventive concept can be implemented in various ways. Further, it is clear to a person skilled in the art that the described embodiments may, but are not required to, be combined with other embodiments in various ways.

## Claims

1. A method comprising:
acquiring (200), in a terminal device (122), a resource budget for transmittal of a channel measurement report to an access node (110); and
performing (202), in the terminal device (122), channel measurements of a radio channel,
**characterized in that** the resource budget defines a plurality of candidate transmission formats for the channel measurement report, wherein the plurality of candidate transmission formats differ from one another in at least one of the following characteristics: amount of transmission resources for reporting time domain characteristics of the radio channel, amount of transmission resources for reporting frequency domain characteristics of the radio channel, amount of transmission resources for reporting spatial domain characteristics of the radio channel, and a number of bits for quantizing contents of the channel measurement report,
and **characterized in that** it further comprises:
selecting (204), in the terminal device (122), a feedback scheme of the channel measurement report on the basis of a result of the channel measurements such that the channel measurement report complies with the resource budget, wherein selecting the feedback scheme comprises selecting for the content of the channel measurement report based on the result of the channel measurements at least one of:
feedback granularity for reporting frequency domain characteristics of the radio channel, feedback granularity for reporting time domain characteristics of the radio channel, feedback granularity for reporting spatial domain characteristics of the radio channel, and feedback granularity for quantizing the content of the channel measurement report, and wherein selecting the feedback scheme comprises selecting a transmission format for the channel measurement report amongst the plurality of candidate transmission formats; and
causing transmission (206) of the channel measurement report according to the selected feedback scheme.

2. An apparatus comprising:
means for acquiring a resource budget for transmittal of a channel measurement report to an access node (110); and
means for performing channel measurements of a radio channel,
**characterized in that** the resource budget defines a plurality of candidate transmission formats for the channel measurement report, wherein the plurality of candidate transmission formats differ from one another in at least one of the following characteristics: amount of transmission resources for reporting time domain characteristics of the radio channel, amount of transmission resources for reporting frequency domain characteristics of the radio channel, amount of transmission resources for reporting spatial domain characteristics of the radio channel, and a number of bits for quantizing contents of the channel measurement report,
and **characterized in that** it further comprises:
means for selecting a feedback scheme of the channel measurement report on the basis a result of the channel measurements such that the channel measurement report complies with the resource budget, wherein selecting the feedback scheme comprises selecting for the content of the channel measurement report based on the result of the channel measurements at least one of: feedback granularity for reporting frequency domain characteristics of the radio channel, feedback granularity for reporting time domain characteristics of the radio channel, feedback granularity for reporting spatial domain characteristics of the radio channel, and feedback granularity for quantizing the content of the channel measurement report, and wherein selecting the feedback scheme comprises selecting a transmission format for the channel measurement report amongst the plurality of candidate transmission formats; and
means for causing transmission of the channel measurement report according to the selected feedback scheme.

3. The apparatus of claim 2, wherein the resource budget indicates an upper limit for uplink capacity usage of the channel measurement report.

4. The apparatus of any preceding claim 2 to 3, wherein selecting the granularity for the content of the channel measurement report comprises:
when the result of the channel measurements indicate that the radio channel is frequency-selective and time non-selective, selecting a higher granularity for reporting frequency domain characteristics of the radio channel in the channel measurement report and lower temporal granularity, or
when the result of the channel measurements indicate that the radio channel is substantially frequency-flat and time selective, selecting a lower granularity for reporting frequency domain characteristics of the radio channel in the channel measurement report and higher temporal granularity.

5. The apparatus of claim 4, wherein selecting the granularity for reporting frequency domain characteristics comprises selecting a number of subbands to be reported based on the result of the channel measurements.

6. The apparatus of any preceding claims 2 to 5, wherein, when the result of the channel measurements indicate that the radio channel is spatially-selective, selecting the granularity for the content of the channel measurement report comprises:
selecting a higher granularity for reporting spatial domain characteristics of the radio channel in the channel measurement report compared to a case where the radio channel comprises a line of sight path to the access node, wherein the increase in the spatial granularity is realized by allocating more bits for describing elements of a channel matrix reported in the channel measurement report and/or by increasing the number of elements of the channel matrix reported in the channel measurement report.

7. The apparatus of any preceding claim 2 to 6, further comprising means for indicating the selected feedback scheme to the access node (110) after selecting the feedback scheme and before transmittal of the channel measurement report, wherein indicating the selected feedback scheme comprises indicating the content of the channel measurement report in terms of amount of resources the terminal device needs for the transmission of the channel measurement report.

8. The apparatus of claim 7, further comprising means for receiving an acknowledgment for the selected feedback scheme from the access node (110) after selecting the feedback scheme and before transmittal of the channel measurement report.

9. The apparatus of claim 8, wherein the acknowledgment is an uplink resource allocation received from the access node (110) and allocating transmission resources for the channel measurement report, the uplink resource allocation being based on the indicated content of the channel measurement report.

10. The apparatus of any preceding claim 2 to 9, further comprising means for transmitting, together with the channel measurement report, an indicator indicating the selected feedback scheme to the access node (110), wherein indicating the selected feedback scheme comprises indicating the content of the channel measurement report.

11. A computer program product embodied on a distribution medium comprising program instructions which, when executed by at least one processor of an apparatus, cause the apparatus to carry out the method of claim 1.

## Patentansprüche

1. Verfahren, das Folgendes umfasst:
Erfassen (200) eines Ressourcenbudgets für eine Übertragung eines Kanalmessberichts zu einem Zugangsknoten (110) in einer Endgerätevorrichtung (122); und
Durchführen (202) von Kanalmessungen eines Funkkanals in der Endgerätevorrichtung (122),
**dadurch gekennzeichnet, dass** das Ressourcenbudget eine Vielzahl von Übertragungsformatkandidaten für den Kanalmessbericht definiert, wobei sich die Vielzahl von Übertragungsformatkandidaten in mindestens einer der folgenden Eigenschaften voneinander unterscheiden: Übertragungsressourcenmenge zum Melden von Zeitdomäneneigenschaften des Funkkanals, Übertragungsressourcenmenge zum Melden von Frequenzdomäneneigenschaften des Funkkanals, Übertragungsressourcenmenge zum Melden von räumlichen Domäneneigenschaften des Funkkanals und eine Anzahl von Bits zum Quantisieren eines Inhalts des Kanalmessberichts,
und **dadurch gekennzeichnet, dass** es ferner Folgendes umfasst:
Auswählen (204) eines Rückmeldungsschemas des Kanalmessberichts in der Endgerätevorrichtung (122) auf Basis eines Ergebnisses der Kanalmessungen, derart, dass der Kanalmessbericht dem Ressourcenbudget entspricht, wobei das Auswählen des Rückmeldungsschemas das Auswählen von mindestens einem von Folgendem für den Inhalt des Kanalmessberichts auf Basis des Ergebnisses der Kanalmessungen umfasst: Rückmeldungsgranularität zum Melden von Frequenzdomäneneigenschaften des Funkkanals, Rückmeldungsgranularität zum Melden von Zeitdomäneneigenschaften des Funkkanals, Rückmeldungsgranularität zum Melden von räumlichen Domäneneigenschaften des Funkkanals und Rückmeldungsgranularität zum Quantisieren des Inhalts des Kanalmessberichts, und wobei das Auswählen des Rückmeldungsschemas das Auswählen eines Übertragungsformats für den Kanalmessbericht aus der Vielzahl von Übertragungsformatkandidaten umfasst; und
Veranlassen einer Übertragung (206) des Kanalmessberichts gemäß dem ausgewählten Rückmeldungsschema.

2. Einrichtung, die Folgendes umfasst:
Mittel zum Erfassen eines Ressourcenbudgets für eine Übertragung eines Kanalmessberichts zu einem Zugangsknoten (110); und
Mittel zum Durchführen von Kanalmessungen eines Funkkanals,
**dadurch gekennzeichnet, dass** das Ressourcenbudget eine Vielzahl von Übertragungsformatkandidaten für den Kanalmessbericht definiert, wobei sich die Vielzahl von Übertragungsformatkandidaten in mindestens einer der folgenden Eigenschaften voneinander unterscheiden: Übertragungsressourcenmenge zum Melden von Zeitdomäneneigenschaften des Funkkanals, Übertragungsressourcenmenge zum Melden von Frequenzdomäneneigenschaften des Funkkanals, Übertragungsressourcenmenge zum Melden von räumlichen Domäneneigenschaften des Funkkanals und eine Anzahl von Bits zum Quantisieren eines Inhalts des Kanalmessberichts,
und **dadurch gekennzeichnet, dass** es ferner Folgendes umfasst:
Mittel zum Auswählen eines Rückmeldungsschemas des Kanalmessberichts auf Basis eines Ergebnisses der Kanalmessungen, derart, dass der Kanalmessbericht dem Ressourcenbudget entspricht, wobei das Auswählen des Rückmeldungsschemas das Auswählen von mindestens einem von Folgendem für den Inhalt des Kanalmessberichts auf Basis des Ergebnisses der Kanalmessungen umfasst: Rückmeldungsgranularität zum Melden von Frequenzdomäneneigenschaften des Funkkanals, Rückmeldungsgranularität zum Melden von Zeitdomäneneigenschaften des Funkkanals, Rückmeldungsgranularität zum Melden von räumlichen Domäneneigenschaften des Funkkanals und Rückmeldungsgranularität zum Quantisieren des Inhalts des Kanalmessberichts, und wobei das Auswählen des Rückmeldungsschemas das Auswählen eines Übertragungsformats für den Kanalmessbericht aus der Vielzahl von Übertragungsformatkandidaten umfasst; und
Mittel zum Veranlassen einer Übertragung des Kanalmessberichts gemäß dem ausgewählten Rückmeldungsschema.

3. Einrichtung nach Anspruch 2, wobei das Ressourcenbudget eine Obergrenze für eine Uplinkkapazitätsverwendung des Kanalmessberichts anzeigt.

4. Einrichtung nach einem der vorhergehenden Ansprüche 2 bis 3, wobei das Auswählen der Granularität für den Inhalt des Kanalmessberichts Folgendes umfasst:
wenn das Ergebnis der Kanalmessungen anzeigt, dass der Funkkanal frequenzselektiv und nicht zeitselektiv ist, Auswählen einer höheren Granularität zum Melden von Frequenzdomäneneigenschaften des Funkkanals im Kanalmessbericht und einer niedrigeren zeitlichen Granularität, oder
wenn das Ergebnis der Kanalmessungen anzeigt, dass der Funkkanal im Wesentlichen frequenzflach und zeitselektiv ist, Auswählen einer niedrigeren Granularität zum Melden von Frequenzdomäneneigenschaften des Funkkanals im Kanalmessbericht und einer höheren zeitlichen Granularität.

5. Einrichtung nach Ansprüche 4, wobei das Auswählen der Granularität zum Melden von Frequenzdomäneneigenschaften das Auswählen einer Anzahl von zu meldenden Unterbändern auf Basis des Ergebnisses der Kanalmessungen umfasst.

6. Einrichtung nach einem der vorhergehenden Ansprüche 2 bis 5, wobei, wenn das Ergebnis der Kanalmessungen anzeigt, dass der Funkkanal räumlich selektiv ist, das Auswählen der Granularität für den Inhalt des Kanalmessberichts Folgendes umfasst:
Auswählen einer höheren Granularität zum Melden von räumlichen Domäneneigenschaften des Funkkanals im Kanalmessbericht verglichen mit einem Fall, in dem der Funkkanal einen Sichtlinienpfad zum Zugangsknoten umfasst, wobei die Erhöhung der räumlichen Granularität durch Zuteilen von mehr Bits zum Beschreiben von Elementen einer Kanalmatrix, die im Kanalmessbericht gemeldet werden, und/oder durch Erhöhen der Anzahl von Elementen der Kanalmatrix, die im Kanalmessbericht gemeldet werden, realisiert wird.

7. Einrichtung nach einem der vorhergehenden Ansprüche 2 bis 6, die ferner Mittel zum Anzeigen des ausgewählten Rückmeldungsschemas für den Zugangsknoten (110), nachdem das Rückmeldungsschema ausgewählt wurde und bevor der Kanalmessbericht übertragen wird, umfasst, wobei das Anzeigen des ausgewählten Rückmeldungsschemas das Anzeigen des Inhalts des Kanalmessberichts mit Bezug auf eine Menge von Ressourcen, die die Endgerätevorrichtung für die Übertragung des Kanalmessberichts benötigt, umfasst.

8. Einrichtung nach Anspruch 7, die ferner Mittel zum Empfangen einer Bestätigung für das ausgewählte Rückmeldungsschema vom Zugangsknoten (110), nachdem das Rückmeldungsschema ausgewählt wurde und bevor der Kanalmessbericht übertragen wird, umfasst.

9. Einrichtung nach Anspruch 8, wobei die Bestätigung eine Uplinkressourcenzuteilung ist, die vom Zugangsknoten (110) empfangen wird und Übertragungsressourcen für den Kanalmessbericht zuteilt, wobei die Uplinkressourcenzuteilung auf dem angezeigten Inhalt des Kanalmessberichts basiert.

10. Einrichtung nach einem der vorhergehenden Ansprüche 2 bis 9, die ferner Mittel zum Übertragen eines Indikators, der das ausgewählte Rückmeldungsschema anzeigt, zusammen mit dem Kanalmessbericht zum Zugangsknoten (110) umfasst, wobei das Anzeigen des ausgewählten Rückmeldungsschemas das Anzeigen des Inhalts des Kanalmessberichts umfasst.

11. Computerprogrammprodukt, das sich auf einem Verteilungsmedium befindet und Programmanweisungen umfasst, die, wenn sie von mindestens einem Prozessor einer Einrichtung ausgeführt werden, die Einrichtung veranlassen, das Verfahren nach Anspruch 1 umzusetzen.

## Revendications

1. Procédé comprenant :
l'acquisition (200), dans un dispositif terminal (122), d'un budget de ressources pour la transmission d'un rapport de mesure de canal à un noeud d'accès (110) ; et
la réalisation (202), dans le dispositif terminal (122), de mesures de canal d'un canal radio,
**caractérisé en ce que** le budget de ressources définit une pluralité de formats de transmission candidats pour le rapport de mesure de canal, dans lequel la pluralité de formats de transmission candidats diffèrent les uns des autres dans au moins l'une des caractéristiques suivantes : la quantité de ressources de transmission pour signaler des caractéristiques de domaine temporel du canal radio, la quantité de ressources de transmission pour signaler des caractéristiques de domaine fréquentiel du canal radio, la quantité de ressources de transmission pour signaler des caractéristiques de domaine spatial du canal radio, et un nombre de bits pour quantifier un contenu du rapport de mesure de canal,
et **caractérisé en ce qu'**il comprend en outre :
la sélection (204), dans le dispositif terminal (122), d'un schéma de rétroaction du rapport de mesure de canal sur la base d'un résultat des mesures de canal, de sorte que le rapport de mesure de canal soit conforme au budget de ressources, dans lequel la sélection du schéma de rétroaction comprend la sélection, pour le contenu du rapport de mesure de canal en fonction du résultat des mesures de canal, d'au moins une parmi :
une granularité de rétroaction pour signaler des caractéristiques de domaine fréquentiel du canal radio, une granularité de rétroaction pour signaler des caractéristiques de domaine temporel du canal radio, une granularité de rétroaction pour signaler des caractéristiques de domaine spatial du canal radio, et une granularité de rétroaction pour quantifier le contenu du rapport de mesure de canal, et dans lequel la sélection du schéma de rétroaction comprend la sélection d'un format de transmission pour le rapport de mesure de canal parmi la pluralité de formats de transmission candidats ; et
la provocation d'une transmission (206) du rapport de mesure de canal selon le schéma de rétroaction sélectionné.

2. Appareil comprenant :
des moyens pour acquérir un budget de ressources pour la transmission d'un rapport de mesure de canal à un noeud d'accès (110) ; et
des moyens pour réaliser des mesures de canal d'un canal radio,
**caractérisé en ce que** le budget de ressources définit une pluralité de formats de transmission candidats pour le rapport de mesure de canal, dans lequel la pluralité de formats de transmission candidats diffèrent les uns des autres dans au moins l'une des caractéristiques suivantes : la quantité de ressources de transmission pour signaler des caractéristiques de domaine temporel du canal radio, la quantité de ressources de transmission pour signaler des caractéristiques de domaine fréquentiel du canal radio, la quantité de ressources de transmission pour signaler des caractéristiques de domaine spatial du canal radio, et un nombre de bits pour quantifier un contenu du rapport de mesure de canal,
et **caractérisé en ce qu'**il comprend en outre :
des moyens pour sélectionner un schéma de rétroaction du rapport de mesure de canal sur la base d'un résultat des mesures de canal de sorte que le rapport de mesure de canal soit conforme au budget de ressources, dans lequel la sélection du schéma de rétroaction comprend la sélection, pour le contenu du rapport de mesure de canal en fonction du résultat des mesures de canal, d'au moins une parmi :
une granularité de rétroaction pour signaler des caractéristiques de domaine fréquentiel du canal radio, une granularité de rétroaction pour signaler des caractéristiques de domaine temporel du canal radio, une granularité de rétroaction pour signaler des caractéristiques de domaine spatial du canal radio, et une granularité de rétroaction pour quantifier le contenu du rapport de mesure de canal, et dans lequel la sélection du schéma de rétroaction comprend la sélection d'un format de transmission pour le rapport de mesure de canal parmi la pluralité de formats de transmission candidats ; et
des moyens pour provoquer une transmission du rapport de mesure de canal selon le schéma de rétroaction sélectionné.

3. Appareil de la revendication 2, dans lequel le budget de ressources indique une limite supérieure pour une utilisation de capacité de liaison montante du rapport de mesure de canal.

4. Appareil de l'une des revendications précédentes 2 et 3, dans lequel la sélection de la granularité pour le contenu du rapport de mesure de canal comprend :
lorsque le résultat des mesures de canal indique que le canal radio est sélectif en fréquence et non sélectif dans le temps, la sélection d'une granularité plus élevée pour signaler les caractéristiques de domaine fréquentiel du canal radio dans le rapport de mesure de canal et d'une granularité temporelle plus faible, ou
lorsque le résultat des mesures de canal indique que le canal radio est sensiblement plat en fréquence et sélectif dans le temps, la sélection d'une granularité plus faible pour signaler les caractéristiques de domaine fréquentiel du canal radio dans le rapport de mesure de canal et d'une granularité temporelle plus élevée.

5. Appareil de la revendication 4, dans lequel la sélection de la granularité pour signaler des caractéristiques de domaine fréquentiel comprend la sélection d'un nombre de sous-bandes à rapporter en fonction du résultat des mesures de canal.

6. Appareil de l'une des revendications précédentes 2 à 5, dans lequel, lorsque le résultat des mesures de canal indique que le canal radio est spatialement sélectif, la sélection de la granularité pour le contenu du rapport de mesure de canal comprend :
la sélection d'une granularité plus élevée pour signaler des caractéristiques de domaine spatial du canal radio dans le rapport de mesure de canal par rapport au cas où le canal radio comprend un chemin de ligne visuelle au noeud d'accès, dans lequel l'augmentation de la granularité spatiale est réalisée en allouant plus de bits pour décrire les éléments d'une matrice de canal rapportée dans le rapport de mesure de canal et/ou en augmentant le nombre d'éléments de la matrice de canal rapportée dans le rapport de mesure de canal.

7. Appareil de l'une des revendications précédentes 2 à 6, comprenant en outre des moyens pour indiquer le schéma de rétroaction sélectionné au noeud d'accès (110) après la sélection du schéma de rétroaction et avant la transmission du rapport de mesure de canal, dans lequel l'indication du schéma de rétroaction sélectionné comprend l'indication du contenu du rapport de mesure de canal en ce qui concerne la quantité de ressources dont le dispositif terminal a besoin pour la transmission du rapport de mesure de canal.

8. Appareil de la revendication 7, comprenant en outre des moyens pour recevoir un accusé de réception pour le schéma de rétroaction sélectionné du noeud d'accès (110) après la sélection du schéma de rétroaction et avant la transmission du rapport de mesure de canal.

9. Appareil de la revendication 8, dans lequel l'accusé de réception est une allocation de ressources de liaison montante reçue du noeud d'accès (110) allouant des ressources de transmissions pour le rapport de mesure de canal, l'allocation de ressources de liaison montante étant basée sur le contenu indiqué du rapport de mesure de canal.

10. Appareil de l'une des revendications précédentes 2 à 9, comprenant en outre des moyens pour transmettre, en même temps que le rapport de mesure de canal, un indicateur indiquant le schéma de rétroaction sélectionné au noeud d'accès (110), dans lequel l'indication du schéma de rétroaction sélectionné comprend l'indication du contenu du rapport de mesure de canal.

11. Produit de programme informatique incorporé sur un support de distribution comprenant des instructions de programme qui, lorsqu'elles sont exécutées par au moins un processeur d'un appareil, amènent l'appareil à mettre en œuvre le procédé de la revendication 1.
